# EUROPÄISCHE PATENTSCHRIFT

(11) **EP 2 842 112 B1**
(45) Veröffentlichungstag und Bekanntmachung des Hinweises auf die Patenterteilung: **21.02.2018**
(21) Anmeldenummer: 13722313.7
(22) Anmeldetag: 22.04.2013
(51) Int. Cl.: G08B 21/04, G08B 21/06, B60Q 1/52, B60K 28/06, B60W 50/16, G05D 1/00, G05D 1/02, B60W 50/14

(54) **VERFAHREN UND VORRICHTUNG ZUM VERSETZEN EINES AUTONOM FAHRENDEN KRAFTFAHRZEUGS IN EINEN SICHEREN ZUSTAND**
METHOD AND APPARATUS FOR CHANGING AN AUTONOMOUSLY TRAVELLING MOTOR VEHICLE TO A SAFE STATE
PROCÉDÉ ET DISPOSITIF POUR PLACER UN VÉHICULE AUTOMOBILE À DÉPLACEMENT AUTONOME DANS UN ÉTAT DE SÉCURITÉ

(30) Priorität: 24.04.2012 DE 102012206725
(43) Veröffentlichungstag der Anmeldung: 04.03.2015
(73) Patentinhaber: Ford Global Technologies, LLC, Dearborn, MI 48126 (US)
(72) Erfinder: URHAHNE, Joseph, 50259 Pulheim (DE)
(74) Vertreter: Dörfler, Thomas
(86) Internationale Anmeldenummer: PCT/EP2013/058313
(87) Internationale Veröffentlichungsnummer: WO 2013/160261

(56) Entgegenhaltungen:
- DE-A1- 19 743 024
- DE-A1-102004 041 225
- DE-A1-102008 018 474
- DE-A1-102008 031 258
- DE-A1-102010 031 038

## Beschreibung

Die Erfindung betrifft ein Verfahren und eine Vorrichtung zum Versetzen eines in einem autonomen Fahrbetrieb befindlichen Kraftfahrzeugs in einen sicheren Zustand, wenn der Führer des Kraftfahrzeugs nicht im Stande ist, den autonomen Fahrbetrieb zu überwachen und ggf. die Kontrolle über das Kraftfahrzeug zu übernehmen.

Ein derartiges Verfahren, welches beim automatischen Ein- oder Ausparken eines Kraftfahrzeugs durchgeführt wird, ist aus der DE 20 2008 019 346 A1 bekannt. Sobald sich eine Stellvorrichtung bzw. Totmanneinrichtung, als die zum Beispiel das Gaspedal fungieren kann, nicht mehr in einer vorbestimmten Stellung befindet, wird das Kraftfahrzeug abgebremst, ggf. mit einer definierten maximalen Verzögerung, und es wird eine elektronische Parkbremse aktiviert. Der Bediener kann sich beim Ein- oder Ausparken auch außerhalb des Kraftfahrzeugs befinden und kann in diesem Fall per Fernsteuerung eine optische oder akustische Warnvorrichtung für andere Verkehrsteilnehmer aktivieren.

Hingegen ist die vorliegende Erfindung auf Situationen gerichtet, in denen das Kraftfahrzeug autonom gesteuert regulär auf einer Straße fährt, um jemanden von einem Ort zu einem anderen zu befördern, oder in denen es, wenn dies gerade nicht möglich ist, wie z.B. in einem Verkehrsstau, auf der Straße stillsteht.

Auch ein derartiger autonomer Fahrbetrieb bedarf einer Warn-Eskalationsstrategie, die gestartet wird, wenn es der Fahrzeugführer unterlässt, einen Totmannschalter zu betätigen. Als Totmannschalter kann ein dedizierter Schalter oder das Bewegen des Lenkrades und/oder der Fahrpedale fungieren. Ein solcher Totmannschalter, so genannt nach seiner Herkunft aus dem Bereich der Eisenbahn, bildet einen Teil der Mensch-Maschine-Schnittstelle bei teilweise oder vollständig autonom fahrenden Straßenkraftfahrzeugen und dient zum Nachweis, dass der Fahrzeugführer noch an Bord ist und lebendig, gesund, wach und im Stande ist, die Fahrsituationen des Kraftfahrzeugs mit seinem ganzen Wahrnehmungsvermögen zu überwachen und nötigenfalls einzugreifen, indem er wieder die Kontrolle über das Kraftfahrzeug übernimmt. Um dies nachzuweisen, wird der Fahrzeugführer in regelmäßigen oder zufällig gewählten Intervallen aufgefordert, den Totmannschalter oder irgendeine als Totmannschalter fungierende Einrichtung zu betätigen.

Die DE 197 43 024 A1 offenbart ein Verfahren mit den Merkmalen des Oberbegriffs des Patentanspruchs 1.

Die DE 10 2008 031 258 A1 offenbart ein Beleuchtungssystem für Fahrzeuge, das ein Nothalte-Signal zur Warnung anderer Verkehrsteilnehmer aussendet, während eine plötzliche Abbremsung des Fahrzeugs stattfindet.

Die DE 10 2008 018 474 A1 offenbart ein Fahrerassistenzsystem, das einen Bremsruck als haptisches Warnsignal für den Fahrer verwendet.

Der Erfindung liegt die Aufgabe zu Grunde, eine Warn-Eskalationsstrategie vorzuschlagen, die besonders für autonom regulär auf einer Straße fahrende oder vorübergehend stehende Kraftfahrzeuge geeignet ist. Diese Strategie soll auch unterschiedlichen Ursachen einer ausbleibenden Totmannschalterbetätigung gerecht werden können, so für den Fall, dass der Fahrzeugführer kurz eingeschlafen ist, wie auch für den schlimmsten Fall, dass der Fahrzeugführer einen Herzinfarkt oder Schlaganfall erleidet.

Diese Aufgabe wird durch ein Verfahren und eine Vorrichtung gemäß den unabhängigen Patentansprüchen gelöst. Vorteilhafte Weiterbildungen der Erfindung sind in den abhängigen Patentansprüchen angegeben.

Die erfindungsgemäße Warn-Eskalationsstrategie, an deren Ende das Kraftfahrzeug nötigenfalls in einen sicheren Zustand versetzt wird, kann zuverlässig einen Fahrzeugführer aufwecken, der eingeschlafen ist, während das Kraftfahrzeug autonom fährt. Außerdem kann die Strategie gut mit Situationen fertig werden, in denen der Fahrzeugführer ein schweres gesundheitliches Problem hat und infolgedessen nicht mehr in der Lage ist, das Kraftfahrzeug zu kontrollieren. Durch die zusätzliche Warnung anderer Verkehrsteilnehmer können nicht nur diese selbst vor Schaden bewahrt werden, sondern auch ein Fahrzeugführer mit gesundheitlichen Problemen, da den anderen Verkehrsteilnehmern bewusst wird, dass dieser dringend Hilfe benötigt.

Die erfindungsgemäße Warn-Eskalationsstrategie besteht in einer Reihe von aufeinanderfolgenden Schritten, die auch überlappend durchgeführt werden können, wobei der Fahrzeugführer zunächst mittels Warnsignalen mit zunehmender Intensität gewarnt wird, z.B. optisch und/oder akustisch oder auch haptisch mittels leichter Vibrationen in Lenkrad und/oder Sitz. Anschließend oder ab einer gewissen Fahrerwarnintensität werden auch andere Verkehrsteilnehmer gewarnt, vorzugsweise mittels einer Art Warnblicklicht, dessen Frequenz und/oder Lichtquellen sich von jenen des üblichen Pannen-Warnblinklichts unterscheiden. Kurz darauf werden intensive haptische Warnungen für den Fahrzeugführer erzeugt, indem dieser durch kurzzeitige abrupte Bremsvorgänge aufgerüttelt wird. Erst wenn der Fahrer auf keine dieser Maßnahmen reagiert, wird das Kraftfahrzeug durch automatisches Bremsen in einen sicheren Zustand versetzt.

Die erfindungsgemäßen Verfahrensschritte, insbesondere jener, den Fahrzeugführer intensiv haptisch zu warnen, werden in der bevorzugten Ausführungsform in Abhängigkeit davon durchgeführt, ob das Kraftfahrzeug gerade fährt oder stillsteht. Wenn das Kraftfahrzeug gerade fährt, wird für eine intensive haptische Warnung das Kraftfahrzeug mehrmals kurzzeitig abrupt gebremst, und zwar jeweils mit einer Intensität, dass sich der Oberkörper des Fahrzeugführers von der Rückenlehne weg ein Stück weit zum Lenkrad hin bewegt, und außerdem so kurzzeitig, dass sich die aktuelle Fahrgeschwindigkeit des Kraftfahrzeugs dadurch relativ wenig ändert. Wenn das Kraftfahrzeug gerade stillsteht, kann die gleiche Wirkung erzielt werden, indem das Kraftfahrzeug mehrmals kurzzeitig in eine Vorwärtsbewegung versetzt und dann wieder abrupt gebremst wird. Sicherheitshalber wird dies aber nur dann durchgeführt, wenn mittels Sensorik festgestellt wird, dass eine vorbestimmte Mindeststrecke vor dem Kraftfahrzeug frei von Hindernissen ist.

Die intensive haptische Warnung wird beendet, wenn eine vorgegebene maximale Zahl von Wiederholungen erreicht ist oder wenn eine vorbestimmte Vorwärtsfahrstrecke zurückgelegt ist oder wenn ein vor dem Kraftfahrzeug auftauchendes Hindernis erkannt wird. In diesem Augenblick wird das Kraftfahrzeug mit mäßiger Verzögerung bis zum Stillstand abgebremst, vorzugsweise mit ungefähr 0,5 m/s², sofern es sich vorher noch in Fahrt befand, und nachfolgend oder andernfalls so lange im Stillstand gehalten, wie es die technischen Gegebenheiten im Kraftfahrzeug ermöglichen, beispielsweise so lange wie die in einer Fahrzeugbatterie gespeicherte elektrische Energie ausreicht, das Hauptbremssystem betätigt zu halten. Falls das Kraftfahrzeug über eine elektrisch betätigbare Feststellbremse verfügt, kann natürlich auch diese aktiviert werden.

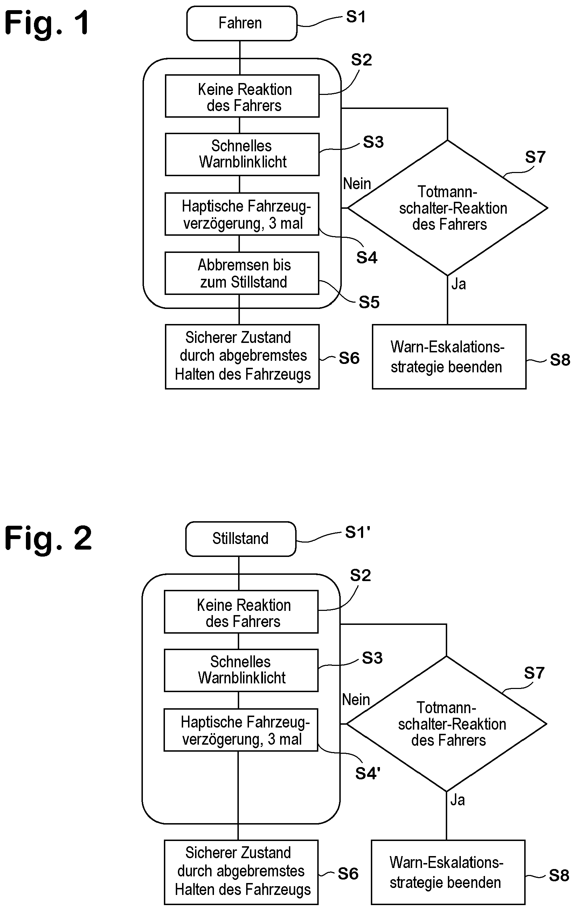

In jeder dieser Phasen wird das Verfahren beendet, wenn erkannt wird, dass der Fahrzeugführer offenbar wieder im Stande ist, den autonomen Fahrbetrieb zu überwachen und die Kontrolle über das Kraftfahrzeug zu übernehmen, weil er den Totmannschalter inzwischen betätigt hat.
Es folgt eine Beschreibung von Ausführungsbeispielen anhand der Zeichnung. Darin zeigen:
- Fig. 1: ein Flussdiagramm einer Warn-Eskalationsstrategie bei einem im autonomen Fahrbetrieb fahrenden Kraftfahrzeug; und
- Fig. 2: ein Flussdiagramm einer Warn-Eskalationsstrategie bei einem im autonomen Fahrbetrieb stillstehenden Kraftfahrzeug.
Es werden zwei Situationen unterschieden, in denen im autonomen Fahrbetrieb eines Kraftfahrzeugs eine angeforderte Totmannschalter-Reaktion des verantwortlichen Fahrzeugführers ausbleibt, nämlich während des Fahrens, wie in Fig. 1 gezeigt, und während eines Stillstands des Kraftfahrzeugs, wie in Fig. 2 gezeigt. In beiden Fällen wird eine Warn-Eskalationsstrategie gestartet, die beendet wird, sobald der Fahrzeugführer den Totmannschalter betätigt.
Wenn, wie in Fig. 1 gezeigt, während des autonomen Fahrens im Schritt S1 festgestellt wird, dass einer Aufforderung, den Totmannschalter zu betätigen, nach einem Zeit-, Fahrstrecken- oder Zufalls-Intervall Iₐ nicht nachgekommen worden ist, erfolgt im Schritt S2 eine mehrfache Warnung des Fahrzeugführers mit optischen und/oder akustischen und/oder schwächeren haptischen Signalen mit zunehmender Intensität. Gibt es auch darauf keine Reaktion, wird im Schritt S2 angenommen, dass der Fahrzeugführer nicht mehr im Stande ist, den autonomen Fahrbetrieb zu überwachen und ggf. die Kontrolle über das Kraftfahrzeug zu übernehmen.

In diesem Fall werden im Schritt S3 andere Verkehrsteilnehmer in der Umgebung des Kraftfahrzeug gewarnt, indem die Warnblickleuchten des Kraftfahrzeugs mit einer Frequenz blinken gelassen werden, die wesentlich höher ist als jene des üblichen Pannen-Warnblinklichts (z. B. 2 Hz). Alternativ oder zusätzlich können auch andere Kraftfahrzeugleuchten blinken gelassen werden oder können die Blinklichter andere Farben haben als üblich.

Anschließend werden im Schritt S4 eine Reihe von intensiven haptischen Warnungen für den Fahrzeugführer erzeugt, indem mehrmals kurzzeitig ganz plötzlich Bremsdruck im Hauptbremssystem des Kraftfahrzeugs aufgebaut wird, und zwar so abrupt und intensiv, dass sich der Oberkörper des Fahrzeugführers jedes Mal von der Rückenlehne weg trägheitsbedingt ein Stück weit zum Lenkrad hin bewegt. Die aktuelle Fahrgeschwindigkeit des Kraftfahrzeugs soll sich dadurch aber nicht ungewöhnlich ändern.

Wenn im Schritt S4 die intensiven haptischen Warnungen drei Mal erzeugt worden sind und der Fahrzeugführer immer noch nicht reagiert hat, wird im Schritt S5 ein Bremsdruck erzeugt, der das Kraftfahrzeug mit mäßiger Verzögerung, z. B. 0,5 m/s², bis zum Stillstand abbremst. Die Warnblickleuchten blinken dabei weiter, bis sich im Schritt S6 das Kraftfahrzeug im Stillstand befindet. Das Kraftfahrzeug wird gebremst im Stillstand gehalten, solange die im Kraftfahrzeug gespeicherte Energie ausreicht, das Hauptbremssystem zu aktivieren.

Im Schritt S7 wird laufend geprüft, ob der Fahrzeugführer in einem der Schritte S2 bis S5 den Totmannschalter betätigt hat, z. B. durch Lenk- oder Pedalbewegungen. Wenn ja, wird im Schritt S8 die Warn-Eskalationsstrategie beendet, und es geht zum Schritt S1 zurück. Wenn nein, geht es mit dem entsprechenden Schritt S2, S3, S4 oder S5 weiter.

Wird andererseits, wie in Fig. 2 gezeigt, während eines Fahrzeugstillstands im autonomen Fahrbetrieb im Schritt S1' festgestellt, dass einer Aufforderung, den Totmannschalter zu betätigen, nach einem Zeitintervall Tₐ nicht nachgekommen worden ist, erfolgt im Schritt S2 eine mehrfache Warnung des Fahrzeugführers mit optischen und/oder akustischen und/oder schwächeren haptischen Signalen mit zunehmender Intensität. Gibt es auch darauf keine Reaktion, wird angenommen, dass der Fahrzeugführer nicht mehr im Stande ist, den autonomen Fahrbetrieb zu überwachen und ggf. die Kontrolle über das Kraftfahrzeug zu übernehmen.

In diesem Fall werden im Schritt S3 andere Verkehrsteilnehmer in der Umgebung des Kraftfahrzeug gewarnt, indem die Warnblickleuchten mit einer Frequenz blinken gelassen werden, die die wesentlich höher ist als jene des üblichen Pannen-Warnblinklichts (z.B. 2 Hz).

Anschließend wird im Schritt S4' geprüft, ob ein Sicherheitsabstand vor dem Kraftfahrzeug frei von Hindernissen ist. Wenn ja, wird das Kraftfahrzeug auf eine sehr geringe Geschwindigkeit beschleunigt und dann ebenso wie im Schritt S4 in Fig. 4 durch einen abrupten Bremsimpuls wieder abgebremst. Dieser Vorgang wird wiederholt durchgeführt, sofern vor dem Kraftfahrzeug kein Hindernis auftaucht.

Wenn im Schritt S4' die intensiven haptischen Warnungen drei Mal erzeugt worden sind oder der Sicherheitsabstand aufgebraucht ist oder vor dem Kraftfahrzeug ein Hindernis aufgetaucht ist und der Fahrzeugführer immer noch nicht reagiert hat, wird im Schritt S6 das Kraftfahrzeug gebremst im Stillstand gehalten, solange die im Kraftfahrzeug gespeicherte Energie ausreicht, das Hauptbremssystem zu aktivieren.

Im Schritt S7 wird laufend geprüft, ob der Fahrzeugführer in einem der Schritte S2 bis S4' den Totmannschalter betätigt hat, z. B. durch Lenk- oder Pedalbewegungen. Wenn ja, wird im Schritt S8 die Warn-Eskalationsstrategie beendet, und es geht zum Schritt S1' zurück. Wenn nein, geht es mit dem entsprechenden Schritt S2, S3 oder S4' weiter.

## Patentansprüche

1. Verfahren zum Versetzen eines in einem autonomen Fahrbetrieb befindlichen Kraftfahrzeugs in einen sicheren Zustand, wenn der Führer des Kraftfahrzeugs nicht im Stande ist, den autonomen Fahrbetrieb zu überwachen und ggf. die Kontrolle über das Kraftfahrzeug zu übernehmen, wobei, wenn der Fahrzeugführer einer Aufforderung, einen Totmannschalter zu betätigen, nicht nachgekommen ist (S1), der Reihe nach automatisch die folgenden Schritte durchgeführt werden:
a) den Fahrzeugführer mittels Warnsignalen mit zunehmender Intensität zu warnen (S2); und
d) das Kraftfahrzeug durch automatisches Bremsen zum Stillstand zu bringen (S5) und/oder im Stillstand zu halten (S6), um es in einen sicheren Zustand zu versetzen;
**dadurch gekennzeichnet, dass**
zwischen den Schritten a) und d) der Reihe nach automatisch die folgenden Schritte durchgeführt werden:
b) andere Verkehrsteilnehmer in der Umgebung des Kraftfahrzeug mittels optischer und/oder akustischer Signale zu warnen (S3); und
c) das Kraftfahrzeug mehrmals kurzzeitig zu bremsen und/oder zu beschleunigen, und zwar mit einer Intensität, dass sich zumindest Teile des Körpers des Fahrzeugführers trägheitsbedingt merklich in Fahrtrichtung bewegen (S4, S4').

2. Verfahren nach Anspruch 1,
**dadurch gekennzeichnet, dass**
im Schritt b) andere Verkehrsteilnehmer in der Umgebung des Kraftfahrzeug mittels einer Art Warnblicklicht gewarnt werden, dessen Frequenz und/oder Lichtquellen sich von jenen des üblichen Pannen-Warnblinklichts unterscheiden.

3. Verfahren nach Anspruch 1 oder 2,
**dadurch gekennzeichnet, dass**
mindestens einer der oder beide Schritte c) und d) in Anhängigkeit davon durchgeführt wird bzw. werden, ob das Kraftfahrzeug gerade fährt oder stillsteht.

4. Verfahren nach Anspruch 3,
**dadurch gekennzeichnet, dass**,
wenn das Kraftfahrzeug gerade fährt, in Schritt c) das Kraftfahrzeug mehrmals kurzzeitig abrupt gebremst wird, und zwar jeweils mit einer Intensität, dass sich der Oberkörper des Fahrzeugführers von der Rückenlehne weg zum Lenkrad hin bewegt.

5. Verfahren nach Anspruch 3,
**dadurch gekennzeichnet, dass**,
wenn das Kraftfahrzeug gerade stillsteht und mittels Sensorik festgestellt wird, dass eine vorbestimmte Mindeststrecke vor dem Kraftfahrzeug frei von Hindernissen ist, im Schritt c) das Kraftfahrzeug mehrmals kurzzeitig in eine Vorwärtsbewegung versetzt und dann wieder abrupt gebremst wird.

6. Verfahren nach Anspruch 4 oder 5,
**dadurch gekennzeichnet, dass**
das mehrmalige abrupte Bremsen und ggf. Vorwärtsfahren beendet wird, wenn eine vorgegebene maximale Zahl von Wiederholungen erreicht ist oder wenn eine vorbestimmte Vorwärtsfahrstrecke zurückgelegt ist oder wenn ein vor dem Kraftfahrzeug auftauchendes Hindernis erkannt wird.

7. Verfahren nach einem der vorhergehenden Ansprüche,
**dadurch gekennzeichnet, dass**
im Schritt d) das Kraftfahrzeug mit einer Verzögerung von ungefähr 0,5 m/s² abgebremst wird, sofern es sich vorher noch in Fahrt befand, und nachfolgend oder andernfalls im Stillstand gehalten wird.

8. Verfahren nach einem der vorhergehenden Ansprüche,
**dadurch gekennzeichnet, dass**
das Verfahren beendet wird, wenn der Fahrzeugführer in einem der Schritte a) bis c) den Totmannschalter betätigt hat.

9. Verfahren nach einem der vorhergehenden Ansprüche,
**dadurch gekennzeichnet, dass**
das Verfahren bei einem Kraftfahrzeug durchgeführt wird, das autonom gesteuert regulär auf einer Straße fährt oder während des autonomen Fahrbetriebs auf der Straße stillsteht.

10. Vorrichtung zum Versetzen eines in einem autonomen Fahrbetrieb befindlichen Kraftfahrzeugs in einen sicheren Zustand, wenn der Führer des Kraftfahrzeugs nicht im Stande ist, den autonomen Fahrbetrieb zu überwachen und ggf. die Kontrolle über das Kraftfahrzeug zu übernehmen,
**dadurch gekennzeichnet, dass**
die Vorrichtung zur Durchführung des Verfahrens nach einem der vorhergehenden Ansprüche eingerichtet ist.

## Claims

1. Method for placing a motor vehicle which is in an autonomous driving mode in a safe state if the driver of the motor vehicle is not capable of monitoring the autonomous driving mode and, under certain circumstances, assuming control of the motor vehicle, wherein, if the vehicle driver has not complied with a request to activate a dead man's handle (S1), the following steps are carried out automatically in sequence:
a) warning the vehicle driver by means of warning signals with increasing intensity (S2); and
d) bringing the motor vehicle to a stationary state by automatic braking (S5) and/or keeping it in the stationary state (S6) in order to place said vehicle in a safe state;
**characterized in that**
between the steps a) and d) the following steps are carried out automatically in sequence:
b) warning other road users in the vicinity of the motor vehicle by means of visual and/or acoustic signals (S3); and
c) braking and/or accelerating the motor vehicle repeatedly briefly, specifically with an intensity such that at least parts of the body of the vehicle driver move perceptively in the direction of travel due to inertia (S4, S4').

2. Method according to Claim 1,
**characterized in that**
in step b) other road users in the vicinity of the motor vehicle are warned by means of a type of flashing warning light whose frequency and/or light sources differ from those of the customary breakdown flashing warning light.

3. Method according to Claim 1 or 2,
**characterized in that**
at least one of or both steps c) and d) is/are carried out as a function of whether the motor vehicle is currently travelling or is stationary.

4. Method according to Claim 3,
**characterized in that**
if the motor vehicle is currently travelling, the motor vehicle is repeatedly briefly and abruptly braked in step c), specifically in each case with an intensity such that the upper body of the vehicle driver moves away from the backrest toward the steering wheel.

5. Method according to Claim 3,
**characterized in that**
if the motor vehicle is currently stationary and it is detected by means of a sensor system that a predetermined minimum distance in front of the motor vehicle is free of obstacles, the motor vehicle is repeatedly briefly made to move forward and then abruptly braked again in step c).

6. Method according to Claim 4 or 5,
**characterized in that**
the repeated abrupt braking and, under certain circumstances, forward movement are ended when a predefined maximum number of repetitions is reached or when a predetermined forward distance is travelled or if an obstacle which appears in front of the motor vehicle is detected.

7. Method according to one of the preceding claims,
**characterized in that**
in step d) the motor vehicle is braked with a deceleration of approximately 0.5 m/s², if it was previously still travelling, and is subsequently or otherwise kept in a stationary state.

8. Method according to one of the preceding claims,
**characterized in that**
the method is ended if the vehicle driver has activated the dead man's handle in one of the steps a) to c).

9. Method according to one of the preceding claims,
**characterized in that**
the method is carried out in a motor vehicle which usually drives on a road under autonomous control or is stationary on the road during the autonomous driving mode.

10. Device for placing a motor vehicle which is in an autonomous driving mode in a safe state if the driver of the motor vehicle is not capable of monitoring the autonomous driving mode and, under certain circumstances, assuming control of the motor vehicle,
**characterized in that**
the device is configured to carry out the method according to one of the preceding claims.

## Revendications

1. Procédé permettant de placer un véhicule automobile se trouvant dans un mode de marche autonome dans un état de sécurité si le conducteur du véhicule automobile n'est pas en mesure de surveiller le mode de marche autonome et, le cas échéant, de prendre le contrôle du véhicule automobile, dans lequel, si le conducteur du véhicule automobile ne s'est pas conformé à une demande d'actionnement d'un interrupteur homme mort, les étapes suivantes sont exécutées automatiquement dans l'ordre suivant :
a) le conducteur du véhicule automobile est averti au moyen de signaux d'avertissement ayant une intensité croissante (S2) ;
d) le véhicule automobile est amené à l'arrêt par un freinage automatique (S5) et/ou est maintenu à l'arrêt (S6) afin de le faire passer dans un état de sécurité ; **caractérisé en ce que** les étapes suivantes sont automatiquement exécutées dans cet ordre entre les étapes a) et d) :
b) d'autres usagers de la route se trouvant dans les environs du véhicule automobile sont avertis au moyen de signaux optiques et/ou acoustiques (S3) ; et
c) le véhicule automobile est freiné et/ou accéléré plusieurs fois pendant une courte durée et cela, avec une intensité telle qu'au moins des parties du corps du conducteur du véhicule automobile se déplacent compte tenu de l'inertie de manière sensible dans la direction de la marche (S4, S4').

2. Procédé selon la revendication 1, **caractérisé en ce que**, à l'étape b), d'autres usagers de la route se trouvant dans les environs du véhicule automobile sont avertis au moyen d'un type de feu de signalisation dont la fréquence et/ou les sources de lumière sont différentes de celles du feu de signalisation de panne habituel.

3. Procédé selon la revendication 1 ou 2,
**caractérisé en ce qu'**au moins l'une des étapes c) et d) ou les deux est ou sont effectuée (s) en fonction du fait que le véhicule automobile est ou non déjà en déplacement ou à l'arrêt.

4. Procédé selon la revendication 3,
**caractérisé en ce que**, si le véhicule automobile se déplace en ligne droite, à l'étape c), le véhicule automobile est brusquement freiné plusieurs fois brièvement à l'étape c), et cela chaque fois avec une intensité telle que la partie supérieure du corps du conducteur du véhicule s'écarte du dossier vers le volant.

5. Procédé selon la revendication 3,
**caractérisé en ce que**, si le véhicule automobile est déjà à l'arrêt et s'il est établi au moyen de capteurs qu'une distance minimale à l'avant du véhicule est dépourvue d'obstacles, à l'étape c), le véhicule automobile est brièvement déplacé plusieurs fois suivant un mouvement vers l'avant puis est de nouveau brusquement freiné.

6. Procédé selon la revendication 4 ou 5,
**caractérisé en ce que** le freinage et, le cas échéant, le déplacement vers l'avant, effectués brusquement plusieurs fois sont interrompus si un nombre maximal prédéterminé de répétitions est atteint ou si une distance de déplacement vers l'avant prédéterminée est parcourue ou si un obstacle apparaissant à l'avant du véhicule est détecté.

7. Procédé selon l'une quelconque des revendications précédentes,
**caractérisé en ce que**, à l'étape d), le véhicule automobile est freiné avec une décélération d'environ 0,5 m/s² et est ensuite ou sinon maintenu à l'arrêt.

8. Procédé selon l'une quelconque des revendications précédentes,
**caractérisé en ce que** le processus est interrompu si le conducteur du véhicule automobile a actionné l'interrupteur homme mort à l'une des étapes a) à c).

9. Procédé selon l'une quelconque des revendications précédentes,
**caractérisé en ce que** le processus est mis en oeuvre pour un véhicule automobile qui se déplace de manière régulière en étant commandé de façon autonome ou est à l'arrêt sur la route pendant le mode de marche autonome.

10. Dispositif destiné à placer un véhicule automobile se trouvant dans un mode de marche autonome dans un état de sécurité si le conducteur du véhicule automobile n'est pas en mesure de surveiller le mode de marche autonome et, le cas échéant, de prendre le contrôle du véhicule,
**caractérisé en ce que** le dispositif est conçu pour mettre en oeuvre le procédé selon l'une quelconque des revendications précédentes.
